# DEMANDE DE BREVET EUROPEEN

(11) **EP 2 200 317 A1**
(43) Date de publication de la demande: **23.06.2010**
(21) Numéro de dépôt: 08364004.5
(22) Date de dépôt: 16.10.2008
(51) Int. Cl.: H04N 7/24, H04L 12/28, H04N 7/10, H04B 3/54

(54) **Dispositif source d'un réseau de communication audiovisuel domestique, procédé de gestion et produit programme d'ordinateur correspondant.**

(30) Priorité: 03.12.2007 FR 0759522
(71) Demandeur: Neli Technologies, 35650 Le Rheu (FR)
(72) Inventeur: Aglan, Issam, 44000 Nantes (FR); Maillot, Patrick, 38320 Bresson (FR); Saint-Lu, François, 28270 Fessanvilliers (FR)

(57) **Abrégé**

L'invention concerne un dispositif source (102) comprenant des moyens de réception (220) d'un flux numérique multiplexé en fréquence comprenant des moyens de gestion (221, 222, 223, 224, 200) du flux numérique reçu, lesdits moyens de gestion comprenant au moins un syntoniseur (221) recevant le flux numérique reçu et délivrant un flux syntonisé véhiculant une pluralité de services audiovisuels.

Selon l'invention, lesdits moyens de gestion comprennent en outre des moyens de distribution (200) permettant, pour chaque flux syntonisé, de distribuer simultanément au moins deux ensembles de paquets représentatifs chacun d'un service audiovisuel véhiculé par ledit flux syntonisé, chaque ensemble de paquets étant destiné à être reçu par au moins un dispositif récepteur.

## Description

### 1. Domaine de l'invention

Le domaine de l'invention est celui de l'accès aux contenus d'un flux numérique multiplexé en fréquence par des dispositifs de visualisation tels que des téléviseurs (aussi bien numériques qu'analogiques).

Plus précisément, l'invention s'applique notamment, mais non exclusivement, au sein d'un réseau de communication domestique comprenant une pluralité de noeuds d'accès permettant d'interconnecter une pluralité de terminaux audio et/ou vidéo.

### 2. Arrière-plan technologique

Dès lors que plusieurs services de télévision ont été disponibles, et que les utilisateurs ont eu la possibilité d'enregistrer leurs programmes favoris, il a été possible de visualiser un programme et simultanément d'en enregistrer un autre sans ajout d'appareils autres que ceux destinés à la visualisation (par exemple un téléviseur) et l'enregistrement (par exemple un magnétoscope).

La multiplication des téléviseurs dans une même habitation s'est vite répandue et il a été possible de visualiser sur chaque téléviseur d'une même habitation un programme différent sans ajout de matériel extérieur, à condition cependant de disposer d'une prise d'antenne à proximité de chacun des téléviseurs.

La mise au point des émissions numériques par satellite, par câble ou TNT (pour « Télévision Numériques Terrestre ») a apporté d'une part un choix de programmes plus large, d'autre part une amélioration de la qualité d'image et de son.

Cependant, l'utilisateur a perdu en simplicité de mise en oeuvre et d'usage puisque chaque téléviseur d'une habitation doit dorénavant comporter son propre décodeur d'émissions numériques (qui embarque parfois des fonctions de décodage dédiées aux programmes pour abonnés payants).

L'utilisateur est ainsi confronté à la multiplicité des appareils qu'il doit utiliser (par exemple des décodeurs d'émissions numériques, des décodeurs TNT, des télécommandes, des magnétoscopes,...), ayant des fonctions et des Interfaces Homme Machine qui varient selon les marques et les modèles des appareils.

Par ailleurs, au cours du temps, et avec l'amélioration de la transportabilité des téléviseurs de plus en plus compacts, l'utilisation des téléviseurs s'est banalisée et les moeurs des utilisateurs ont évolué. Ils souhaitent dorénavant avoir accès à leurs programmes favoris quelque soit l'endroit où ils se trouvent dans leur habitation. Aussi, se pose-t-il le problème de la disponibilité de la source d'information destinée aux appareils.

En effet, bien que de très gros progrès aient été effectués en matière de portabilité, un téléviseur doit par exemple toujours être connecté à une antenne de réception, voire même à un décodeur si l'utilisateur désire recevoir ses programmes favoris en qualité numérique.

Ainsi, il est nécessaire de pouvoir connecter le téléviseur à une antenne de réception ou à un décodeur, ce qui dégrade la mobilité des appareils audio-vidéo au sein d'une habitation.

Actuellement, à titre de comparaison, seuls les appareils purement audio ont véritablement atteint le stade de portabilité sans perte de qualité ou d'autonomie. Il est en effet aisé de trouver des appareils grand public permettant des heures d'écoute de musique en haute qualité et qu'un utilisateur peut emporter partout avec lui. Il n'en va pas de même pour la télévision dont la seule offre comparable est la télévision sur téléphone portable, mais qui reste très marginale à cause de son coût élevé et de la faible taille des écrans des téléphones.

D'autre part, la multiplicité des sources de média (audio et/ou vidéo) est un enjeu majeur dans l'utilisation que nous faisons de nos moments libres. En effet, la notion de centres médias (ou « Home Media Center » en anglais), encore appelés réseaux domestiques de communication, est de plus en plus présente et tend à se faire une place de choix dans les habitations particulières.

Cependant, du fait du manque de disponibilité d'un réseau ou d'un système de câblage domestique assurant la transmission de flux de données importants, la diffusion de tels centres médias est ralentie.

En effet, les réseaux ou systèmes de câblage domestiques sont actuellement marginaux et difficiles à installer dans les habitations particulières. Il est généralement nécessaire de câbler une habitation, et si une telle installation, bien que coûteuse et « non évolutive », est envisageable par un propriétaire, il est peu probable qu'un locataire soit réalise un tel investissement, soit en ait l'autorisation par ses bailleurs.

Par ailleurs, il existe des réseaux de communication audio-visuelle domestique comprenant plusieurs terminaux de visualisation de services audiovisuels, par exemple des téléviseurs numériques, distribués dans plusieurs pièces d'une habitation. Un tel réseau audiovisuel peut comprendre des noeuds d'accès, par exemple un décodeur numérique, qui comprend un tuner (également appelé syntoniseur), chacun associé à un téléviseur numérique, qui permettent d'accéder aux contenus véhiculés par un flux numérique multiplexé en fréquence tels que le flux TNT (pour « Télévision Numérique Terrestre »). Ainsi, chaque décodeur numérique permet de sélectionner une fréquence du flux multiplexé et permet d'afficher sur le téléviseur numérique auquel il est associé un programme numérique du flux.

Ainsi, dans un tel réseau audio visuel classique, afin de visualiser simultanément, sur chaque téléviseur numérique d'une pluralité de téléviseurs numériques du réseau, un programme numérique distinct véhiculé par un flux numérique multiplexé en fréquence, il est nécessaire de prévoir autant de décodeurs numériques que de téléviseurs numériques.

### 3. Objectifs de l'invention

L'invention, dans au moins un mode de réalisation, a notamment pour objectif de pallier ces inconvénients de l'art antérieur.

Plus précisément, un objectif de l'invention, dans au moins un de ses modes de réalisation, est de fournir, une technique permettant de visualiser simultanément plusieurs services audiovisuels (tels que des programmes numériques) véhiculés par un flux numérique multiplexé en fréquence sur plusieurs dispositifs de visualisation qui ne nécessite pas qu'à chaque dispositif de visualisation soit associé un syntoniseur distinct.

L'invention, dans au moins un de ses modes de réalisation, a encore pour objectif de mettre en oeuvre une telle technique qui permette de réduire l'encombrement et le coût associés à l'installation des noeuds d'accès.

L'invention, dans au moins un de ses modes de réalisation, a encore pour objectif de mettre en oeuvre une telle technique qui soit simple à mettre en oeuvre et pour un faible coût.

### 4. Exposé de l'invention

Dans un mode de réalisation particulier de l'invention, il est proposé un dispositif source comprenant des moyens de réception d'un flux numérique multiplexé en fréquence comprenant des moyens de gestion du flux numérique reçu, lesdits moyens de gestion comprenant au moins un syntoniseur recevant le flux numérique reçu et délivrant un flux syntonisé véhiculant une pluralité de services audiovisuels.

Selon le mode de réalisation particulier de l'invention, lesdits moyens de gestion comprennent en outre des moyens de distribution permettant, pour chaque flux syntonisé, de distribuer simultanément au moins deux ensembles de paquets représentatifs chacun d'un service audiovisuel véhiculé par ledit flux syntonisé, chaque ensemble de paquets étant destiné à être reçu par au moins un dispositif récepteur.

Ainsi, le principe général de l'invention repose sur la mise en oeuvre d'une diffusion simultanée sur plusieurs dispositifs récepteurs de plusieurs services audiovisuels différents véhiculés par un même flux syntonisé délivré par un même syntoniseur à partir d'un flux numérique multiplexé en fréquence.

Dans un cas particulier, la totalité des services audiovisuels véhiculés par le flux numérique multiplexé peut également être, diffusée simultanément sur plusieurs récepteurs.

Par ailleurs, alors que dans les techniques antérieures classiques, il était nécessaire de mettre en oeuvre autant de syntoniseurs qu'il y avait de dispositifs récepteurs d'un service audiovisuel, la présente invention dans au moins un mode de réalisation particulier permet de ne mettre en oeuvre qu'un seul syntoniseur pour plusieurs dispositifs récepteurs recevant des services audiovisuels distincts.

Selon une première mise en oeuvre avantageuse du mode de réalisation particulier, lesdits moyens de distribution comprennent des moyens de transmission de chaque ensemble de paquets, via un réseau de communication, à au moins un dispositif récepteur connecté audit réseau.

Ainsi, le dispositif source peut véhiculer des ensembles de paquets de données représentatifs de services audiovisuels à un dispositif récepteur connecté sur le même réseau auquel il appartient.

Selon une seconde mise en oeuvre avantageuse du mode de réalisation particulier de l'invention, lesdits moyens de distribution comprennent des moyens de délivrance de chaque ensemble de paquets sur une sortie distincte dudit dispositif source destinée à la connexion d'un dispositif récepteur.

Ainsi, il est possible de connecter une pluralité de dispositifs récepteurs directement sur plusieurs sorties du dispositif source afin que chacun des dispositifs récepteurs puisse recevoir un service audiovisuel particulier.

Avantageusement, lesdits moyens de distribution comprennent également des moyens de stockage d'au moins certains des ensembles de paquet de données représentatifs de services véhiculés par le flux syntonisé, dits ensembles mémorisés,
et lesdits au moins deux ensembles de paquets de données font partie desdits ensembles mémorisés.

Ainsi, un stockage, par exemple temporaire, des paquets associés à au moins deux services audiovisuels peut être réalisé.

Préférentiellement, lesdits moyens de stockage comprennent, pour chaque ensemble de paquets, une mémoire tampon circulaire comprenant une pluralité de blocs mémoire.

De manière avantageuse, le dispositif source comprend des moyens d'obtention d'une liste de services audiovisuels comprenant les services associés auxdits ensembles mémorisés et des moyens de transmission de cette liste à chacun des dispositifs récepteurs.

Ainsi, les dispositifs récepteurs du réseau de communication peuvent bénéficier d'une liste de certains services audiovisuels véhiculés par le flux numérique multiplexé permettant par exemple à un utilisateur final de chaque dispositif récepteur de choisir le service de son choix parmi l'ensemble des services audiovisuels de la liste.

Selon une caractéristique avantageuse, ledit syntoniseur est un syntoniseur TNT.

De manière préférentielle, le dispositif source est connecté à chacun des dispositifs récepteurs dudit réseau au moyen de la technologie des courants porteurs en ligne.

Ainsi, il n'est pas nécessaire de disposer d'un câblage particulier pour mettre en oeuvre l'invention. En effet, dans l'exemple d'une habitation, le câblage électrique classique peut servir de support de transmission aux échanges de données entre les différents dispositifs source et récepteurs du réseau de communication.

Avantageusement, lesdits moyens de gestion comprennent un nombre déterminé de syntoniseurs, ledit nombre déterminé étant calculé en fonction du nombre de services audiovisuels véhiculés par le flux numérique multiplexé en fréquence et en fonction du nombre de dispositifs récepteurs destinés à recevoir un ensemble de paquets de données.

De cette façon, il est possible de mettre à disposition des dispositifs récepteurs les différents services audiovisuels véhiculés par le flux numérique.

Préférentiellement, le dispositif source comprend des moyens de réception d'au moins une requête en provenance d'un premier dispositif récepteur requérant auprès dudit dispositif source la transmission, d'un ensemble de paquets représentatif d'un service audiovisuel, dit service audiovisuel demandé,
et le dispositif comprend des moyens de détermination si ledit service audiovisuel demandé est identique à un service audiovisuel reçu par au moins un second dispositif récepteur,
et le dispositif source comprend des moyens de multi-diffusion de l'ensemble de paquets représentatifs dudit service audiovisuel reçu par le second dispositif récepteur afin de le transmettre au premier dispositif récepteur, lesdits moyens de multi-diffusion étant activés dans le cas d'une détermination positive.

Ainsi, une multi-diffusion (ou « muticasting » en anglais) d'un même service audiovisuels vers plusieurs dispositifs récepteurs du réseau de communication ayant demandé ce service est réalisée afin de diminuer les ressources du dispositif source utilisées.

Un autre mode de réalisation de l'invention concerne un procédé de gestion d'un flux numérique multiplexé en fréquence préalablement reçu par un dispositif source, ledit procédé de gestion étant mis en oeuvre par ledit dispositif source,
ledit procédé de gestion comprenant une étape de syntonisation du flux numérique reçu permettant de délivrer au moins un flux syntonisé véhiculant une pluralité de services audiovisuels.

Selon cet autre mode de réalisation, le procédé de gestion comprend en outre, pour chaque flux syntonisé, une étape de distribution simultanée d'au moins deux ensembles de paquets de données représentatifs chacun d'un service audiovisuel véhiculé par ledit flux syntonisé, chaque ensemble de paquets étant destiné à être reçu par au moins un dispositif récepteur.

Un autre mode de réalisation de l'invention concerne un produit programme d'ordinateur, téléchargeable depuis un réseau de communication et/ou enregistré sur un support lisible par ordinateur et/ou exécutable par un processeur, **caractérisé en ce qu**'il comprend des instructions de code de programme pour la mise en oeuvre du procédé de gestion tel que précédemment décrit.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un réseau de communication domestique selon un mode de réalisation particulier conforme à l'invention ;
- la figure 2 présente un exemple d'architecture générique d'un dispositif maître selon le mode de réalisation particulier de l'invention ;
- la figure 3 présente un exemple d'architecture générique d'un dispositif nomade selon le mode de réalisation particulier de l'invention ;
- la figure 4 précise les étapes principales d'un algorithme de fonctionnement du dispositif maître selon le mode de réalisation particulier conforme à l'invention ;
- la figure 5 présente les étapes principales d'un algorithme de fonctionnement d'un dispositif nomade selon le mode de réalisation particulier conforme à l'invention ;
- la figure 6 présente le principe de fonctionnement du tuner d'un module de réception du dispositif maître selon le mode de réalisation particulier de l'invention ;
- la figure 7 présente un exemple d'architecture d'une mémoire FIFO de la mémoire tampon du dispositif maître selon le mode de réalisation particulier de l'invention ;
- la figure 8 précise les étapes principales d'un algorithme de gestion d'une mémoire FIFO de la mémoire tampon du dispositif maître, selon le mode de réalisation particulier de l'invention ;
- la figure 9 présente un exemple de gestion, par le dispositif maître, des demandes de diffusion de services par des dispositifs nomades du réseau de communication, selon le mode de réalisation particulier de l'invention.

### 6. Description détaillée

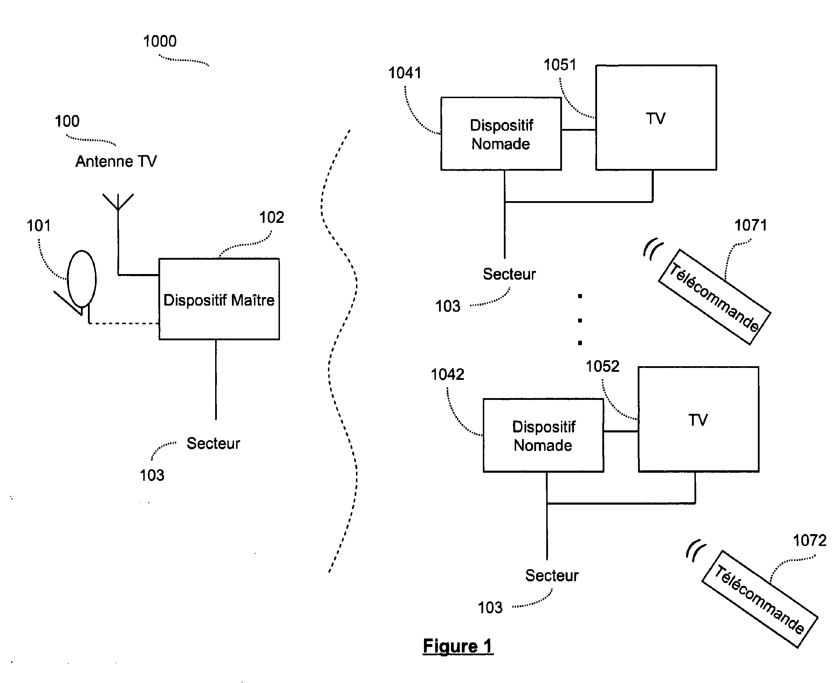

Selon un mode de réalisation particulier de l'invention, on se place dans la suite de la description dans le cadre d'un réseau de communication domestique 1000 utilisant la technologie par Courants Porteurs en Ligne, désigné par la suite CPL, tel qu'illustré par *la* ***figure 1****.*

Bien entendu, l'invention s'applique également dans le cadre d'un réseau de communication domestique utilisant la technologie Wi-Fi. L'invention peut également s'appliquer dans le cadre d'un réseau utilisant en combinaison plusieurs technologies (par exemple la technologie CPL avec le WiFi) ou même dans un réseau filaire.

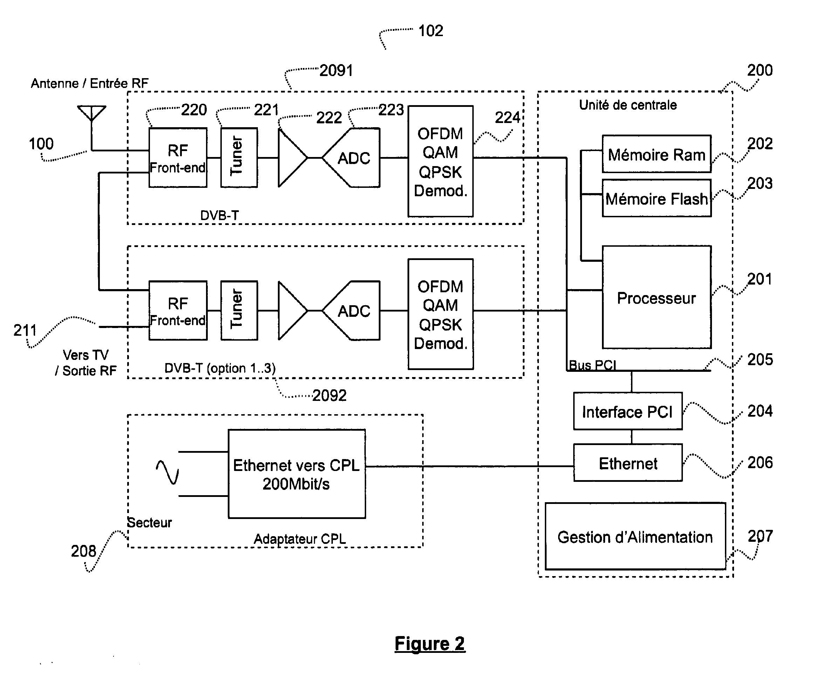

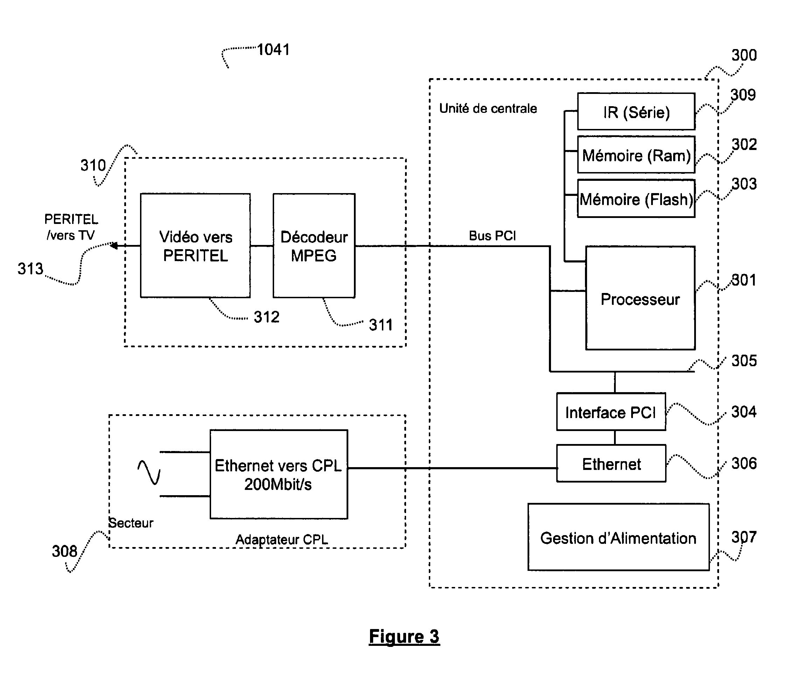

Ainsi, le réseau de communication 1000, tel qu'illustré par la figure 1, comprend un dispositif maître 102 (ci-après détaillé en relation avec la figure 2), encore appelé dispositif source, et une pluralité de dispositifs nomades 1041, 1042 (ci-après détaillés en relation avec la figure 3), encore appelés dispositifs récepteur. Les dispositifs maître et nomade sont également appelés par la suite dispositifs de communication.

Chacun des dispositifs de communication (102, 1041, 1042) du réseau de communication 1000 est capable d'émettre et de recevoir des données.

Les dispositifs de communication (102, 1041, 1042) du réseau de communication 1000 sont connectés sur le courant alternatif du secteur 103 d'une habitation.

Une antenne de réception 100 hertzienne ou radiofréquences peut être connectée au dispositif maître 102. Il est également envisageable de connecter tout autre type d'antenne de réception 101 au dispositif maître 102, par exemple une antenne de réception satellite.

Chaque dispositif nomade (1041, 1042) peut être connecté à un ou plusieurs dispositifs d'affichage (1051, 1052) (par exemple un téléviseur).

Par ailleurs, les dispositifs nomades du réseau de communication 1000 peuvent être contrôlés à distance au moyen d'un dispositif de contrôle (1071, 1072) par exemple une télécommande infrarouge.

On décrit, en relation avec la ***figure 2****,* un exemple d'architecture générique d'un dispositif maître 102, selon le mode de réalisation particulier de l'invention.

Le dispositif maître 102 assure la diffusion et la distribution de médias aux différents dispositifs nomades du réseau domestique 1000.

Ce dispositif maître 102 comprend notamment :
- une unité centrale 200 ;
- des modules de réception (2091, 2092) (encore appelés « cartes d'entrée » ou « cartes de réception » par la suite), par exemple de type TNT, dédiés à la réception de données radio fréquences. Il est également envisageable de mettre en oeuvre des modules de réception autres que des modules de réception TNT. Seuls deux modules de réception (2091, 2092) sont représentés sur la figure 2. Bien entendu, le dispositif 102 maître peut comprendre tout autre nombre de modules de réception. Il est également possible de connecter plusieurs modules de réception de nature différente (par exemple images de télévision de provenances diverses, données audio analogiques numérisées, etc.) qui seront reconnus et pris en compte par un programme informatique pilotant le dispositif maître 102. Dans le cas de modules de réception TNT, une connexion vers une seule antenne 210 (rattachée à un module de réception TNT 2091) est assurée et propagée par chaînage vers un autre module de réceptions TNT 2092, et les autres modules de réception éventuellement présents dans le dispositif maître 102. Par ailleurs, une connexion 211 est disponible en fin de chaîne pour diffuser les signaux non traités et issus de l'antenne de réception 210 vers une installation standard non représentée sur la figure 1 ;
- un adaptateur CPL 208 permettant la connexion du dispositif maître 102 au secteur 103. L'adaptateur CPL 208 assure la transmission de données à haut débit depuis l'unité de centrale 200 sur le secteur 103 en utilisant les capacités des courants porteurs en ligne CPL ;
- un bus 205, par exemple un bus PCI (en anglais « Protocol Control Information »). Le bus PCI 205 réalise l'interface entre l'unité centrale 200 et les modules de réception TNT. Bien entendu, un bus série de type USB 2.0 (pour en anglais « Universal Serial Bus ») ou tout autre type de bus peuvent également être envisagés. Le bus 205 permet aussi au programme informatique pilotant le dispositif maître 102 de dialoguer avec un module Ethernet 206 (ci-après-décrit) connecté à une interface de communication PCI 204 (ci-après décrite).

L'unité centrale 200 comprend notamment :
- un processeur 201 ;
- une mémoire de données 202 ou RAM (pour en anglais « Random Access Memory ») ;
- une mémoire programme 203 (encore appelée « Mémoire Flash ») qui sert notamment de mémoire programme, mais aussi de mémoire de sauvegarde. On peut envisager d'ajouter au dispositif maître des organes de mémorisation plus spécialisés, permettant par exemple de mémoriser de manière plus sécurisée des codes ou mots de passe ;
- une interface 204 de communication PCI encore appelé bus PCI. Bien entendu, un autre type d'interface peut être envisagé (par exemple une interface USB) ;
- un module Ethernet 206 connecté au bus PCI 204 ;
- un gestionnaire d'alimentation 207 qui assure le fonctionnement stable et le refroidissement si nécessaire des différents modules du dispositif maître 102.

Par la suite, l'association d'un processeur 201, d'une mémoire de données 202, et d'une mémoire programme 203 pourra par exemple constituer des moyens de distribution au sens de la présente invention.

Chaque module de réception comprend notamment :
- un bloc de réception RF 220 d'un flux numérique multiplexé en fréquences;
- un tuner 221 (ou syntoniseur), par exemple de type TNT. Selon le mode de réalisation particulier de l'invention, le tuner 221 est un tuner numérique. Bien entendu, selon une variante, on peut envisager des tuners analogiques;
- un convertisseur analogique numérique 223, encore noté ADC (en anglais « Analog to Digital Converter ») ;
- un module amplificateur tampon 222 localisé entre la partie analogique du tuner 221 (réalisant la syntonisation) et le convertisseur analogique numérique 223. Le module amplificateur tampon 222 a également un rôle d'ajusteur de gain automatique AGC (en anglais « Automatic Gain Controller ») permettant de présenter au convertisseur analogique numérique 223 un signal de « qualité » aussi constante que possible ;
- un démodulateur 224.

Optionnellement, le noeud source peut comprendre un nombre déterminé de tuners, ce nombre déterminé étant calculé en fonction du nombre de services audiovisuels véhiculés par le flux numérique multiplexé en fréquence et en fonction du nombre de noeuds récepteurs du réseau de communication 1000.

Par la suite, l'association d'une unité centrale 200, d'un tuner 221, d'un module 222, d'un convertisseur AN 223 et d'un démodulateur 224 pourra par exemple constituer des moyens de gestion d'un flux numérique reçu au sens de la présente invention.

Ainsi, le dispositif maître 102 peut s'apparenter à un ordinateur incorporant plusieurs modules de réception de médias et dédié à la manipulation de données en provenance de ses modules de réception recevant des flux d'information de l'extérieur et à destination des dispositifs nomades (1041, 1042).

Chacun des modules de réception traite l'information qu'il reçoit d'une manière spécifique. Ainsi, à titre d'exemple non limitatif, un tuner TNT 221 d'un module de réception TNT 2091 reçoit des données numériques d'un signal TNT (encore appelé flux numérique) par l'antenne terrestre 210 et démultiplexe ce signal TNT en un flux de données MPEG représentatif d'un programme de télévision donné.

Le même principe peut s'appliquer à des modules de réception par câble ou satellite, analogique ou numérique 101, à des interfaces de réception radio ou audio ou encore à la réception de données analogiques ou numériques provenant d'une interface réseau ou d'une source Internet.

Chaque tuner 221 installé dans le dispositif maître 102 a pour tâche de contrôler, démultiplexer, et décoder si nécessaire un flux de données, devenant de fait une source spécifique disponible au choix de l'utilisateur.

Ainsi, selon un exemple du mode de réalisation particulier, les tuners TNT 221 du dispositif maître 102 sont essentiellement utilisés pour permettre une distribution nomade des programmes TNT (encore appelés services dans la suite de la description), sans que l'ensemble des dispositifs nomades n'ait besoin de câblage d'antenne ou de l'utilisation d'antenne d'intérieur.

Cela permet notamment de distribuer des services TNT vers des dispositifs d'affichage non capables de réception TNT, sans faire appel à un équipement externe additionnel.

Dans une variante du dispositif maître 102, ce dernier peut être doté de capacités supplémentaires par l'intégration d'un support de stockage, par exemple un disque dur. Ainsi, le dispositif maître 102 peut sauvegarder des données personnelles de l'utilisateur, enregistrer immédiatement ou en différé des émissions de télévision ou des médias (tant depuis le dispositif maître 102 que sur interprétation d'ordres venant d'un dispositif nomade), réaliser du "timeshifting" (fonction de pause d'une émission avec reprise quelques minutes après), ...

Cependant, et pour des raisons évidentes de clarté, nous ne décrirons pas en détail l'étendue des possibilités envisagées, ces dernières étant pour la plupart rendues possible par la seule modification des programmes informatiques des dispositifs de communication maître et nomades pour permettre un usage optimal de la fonction de base du support de stockage intégré au dispositif maître.

Il est à noter que les modules de gestion interne du dispositif maître (par exemple le système d'exploitation, la gestion des tâches, la gestion des priorités, la gestion erreurs et des exceptions, la gestion des droits et sécurité, ...) sont inclus dans le programme informatique du dispositif maître 102, et ne sont pas détaillés plus en détail dans un souci évident de simplification et de clarté.

Il est à noter que, selon une variante du mode de réalisation particulier de l'invention (non décrit dans un souci de clarté), le dispositif source peut comprendre plusieurs sorties sur lesquelles des dispositifs récepteurs (par exemple un téléviseur ou un dispositif nomade) peuvent être directement connectés sans mise en oeuvre d'un réseau de communication.

On décrit, en relation avec la ***figure 3****,* un exemple d'architecture générique d'un dispositif nomade, selon le mode de réalisation particulier de l'invention.

Le dispositif nomade 1041 peut recevoir des flux de données en provenance du dispositif maître 102, et les formate au standard approprié au dispositif d'affichage 105 qui lui est connecté.

Le dispositif nomade 1041 comprend notamment :
- une unité centrale 300 ;
- un module de décodage 310 dédié au décodage et au formatage des données reçues par le dispositif nomade 1041 ;
- un adaptateur CPL 308 permettant la connexion du dispositif nomade 1041 au secteur 103. L'adaptateur CPL 308 assure la transmission de données à haut débit de l'unité de centrale 300 sur le secteur 103 en utilisant les capacités des courants porteurs en ligne CPL ;
- un bus 305, par exemple un bus PCI (en anglais « Protocol Control Information »). Le bus PCI 305 réalise l'interface entre l'unité centrale 200 et le module de décodage 310. Bien entendu, un bus série de type USB 2.0
ou tout autre type de bus peuvent également être envisagés. Le bus 305 permet également au programme informatique pilotant le dispositif nomade 1041 de dialoguer avec un module Ethernet 306 (ci-après décrit) connecté à une interface de communication PCI 304 (ci-après décrite).

L'unité centrale 200 comprend notamment :
- un processeur 301 ;
- une mémoire de données 302 ou RAM ;
- une mémoire programme 303 (encore appelée « Mémoire Flash »), qui sert notamment de mémoire programme, mais aussi de mémoire de sauvegarde. On peut envisager d'ajouter au dispositif esclave des organes de mémorisation plus spécialisés, permettant par exemple de mémoriser de manière plus sécurisée des codes ou mots de passe ;
- une interface 304 de communication PCI, encore appelée bus PCI. Bien entendu, d'autres types d'interface peuvent être envisagés (par exemple une interface USB) ;
- un module Ethernet 306 connecté au bus PCI 204 ;
- une interface série infrarouge 309 qui permet la réception de commandes depuis un dispositif de contrôle à distance, par exemple une télécommande. Les commandes reçues en provenance de la télécommande sont traitées par un programme informatique pilotant le processeur 301 depuis la mémoire programme 303. Les commandes peuvent être directement interprétées par le programme informatique pour ses besoins propres, ou peuvent être acheminées vers le dispositif maître 102 au moyen de l'adaptateur CPL 308 ;
- un gestionnaire d'alimentation 307 qui assure le fonctionnement stable et le refroidissement si nécessaire des différents modules du dispositif nomade 1041.

Le module de décodage 310 comprend notamment :
- un bloc de décodage MPEG 311 ;
- un module de conversion 312, par exemple de type Vidéo/Péritel, qui assure la transformation du flux d'information MPEG vers un format électrique compatible avec les signaux vidéo en sortie d'une prise péritel grâce à une électronique adaptée. Bien entendu, d'autres types de modules de conversion peuvent être envisagés ;
- une prise péritel 313 qui permet de connecter un dispositif d'affichage grand public (par exemple un téléviseur).

Il est à noter que les modules de gestion interne du dispositif nomade 1041 (par exemple le système d'exploitation, la gestion des tâches, la gestion des priorités, la gestion des états de veille, la gestion erreurs et des exceptions, la gestion des droits et sécurité, ...) sont inclus dans le programme informatique pilotant le dispositif nomade 1041, et ne sont pas détaillés plus en détail dans un souci de simplification et de clarté.

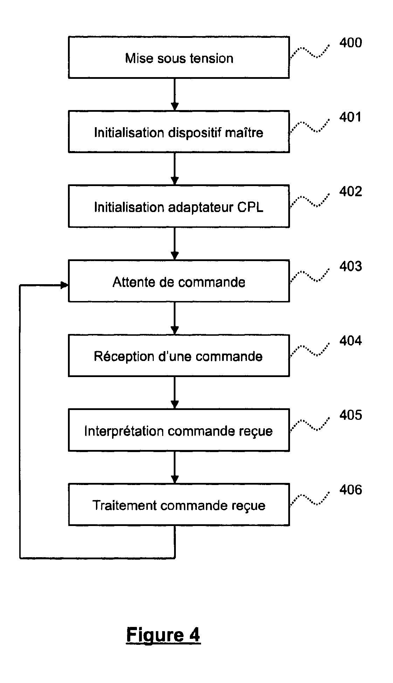

On présente désormais, en relation avec la ***figure 4****,* les étapes principales d'un algorithme de fonctionnement du dispositif maître 102 selon le mode de réalisation particulier conforme à l'invention.

L'algorithme de fonctionnement du dispositif maître 102 comprend une phase d'initialisation et une phase de traitement ci-après détaillées.

La phase d'initialisation comprend notamment les étapes 400 à 403.

Dans une étape 400, le dispositif maître 102 est mis sous tension, et le programme informatique pilotant le dispositif maître 102 réalise une recherche des modules de réception (ou cartes d'entrée) présents dans le dispositif maître 102.

Dans une étape 401, le programme informatique du dispositif maître 102 effectue les tâches d'initialisation suivantes :
- identification des modules de réception;
- classement des modules de réception identifiés ;
- initialisation spécifique de chacun des modules de réception identifiés (notamment dans notre exemple, la numération et l'initialisation des modules de réception TNT identifiés, la recherche et le classement automatiques des chaînes -encore appelées programmes ou services dans la suite- disponibles dans des tables sauvegardées par exemple dans la mémoire flash 203 du dispositif maître 102).

Dans une étape 402, le programme informatique pilotant le dispositif maître 102 initialise l'adaptateur CPL 208 afin de garantir les échanges avec les dispositifs nomades.

Dans une étape 403, le dispositif maître 102 est en attente de réception de commandes en provenance des dispositifs nomades.

La phase de traitement comprend les étapes 404 à 406 ci-après détaillées.

Après la phase d'initialisation (étape 400 à 403), dans une étape 404, le dispositif maître 102 reçoit une commande d'un des dispositifs nomades.

Dans une étape 405, le programme du dispositif maître 102 interprète la commande reçue et l'aiguille vers un module de traitement adapté (non représenté sur la figure 2).

Dans une étape 406, la commande reçue est traitée. Ainsi, à titre d'exemple illustratif et non-limitatif, lorsque que la commande reçue est une commande de choix d'un service (ou chaîne de télévision), le programme informatique du dispositif maître 102 récupère à partir des tables préalablement mémorisées (étape 401) les informations adaptées à la réception optimale du service considéré. Il transmet ensuite les actions associées à réaliser (accord sur la fréquence adaptée à la réception du service, ouverture des ports, ...) au module de réception correspondant.

Le traitement de la commande reçue par le dispositif maître 102 est géré par un module logiciel, appelé Master Unit Manager, présent au sein du dispositif maître 102. Le Master Unit Manager est par exemple un sous-ensemble du programme informatique pilotant le dispositif maître.

Le module Master Unit Manager permet notamment d'extraire un ou plusieurs services TNT d'un ou plusieurs signal mono fréquence TNT (encore appelé « multiplex »). Le flux MPEG vidéo issu d'un multiplex TNT après traitement par le Master Unit Manager est acheminé vers le dispositif nomade approprié, par l'intermédiaire de l'adaptateur CPL 208.

Le module Master Unit Manager assure une optimisation des données transférées (depuis le module de réception ou depuis la source vers les dispositifs nomades).

Lorsque la commande reçue dans l'étape 404 a été complètement interprétée et exécutée, le dispositif maître 102 revient dans un état d'attente de nouvelles commandes (étape 403) en provenance des dispositifs nomades.

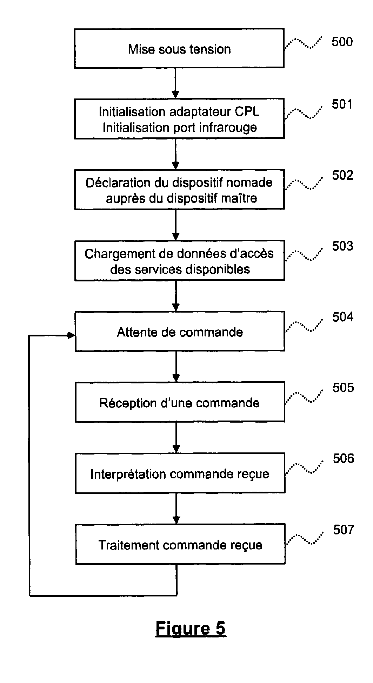

On présente désormais, en relation avec la ***figure 5***, les étapes principales d'un algorithme de fonctionnement d'un dispositif nomade selon le mode de réalisation particulier conforme à l'invention.

On considère dans la suite, à titre d'exemple, qu'un téléviseur 1051 est connecté au dispositif nomade 1041, par exemple au moyen d'une prise péritel. Dans ce cas, le dispositif nomade 1041 est dédié à recevoir principalement des services (ou programmes vidéo) sur demande d'un utilisateur du téléviseur 1051.

Aucune connexion d'une antenne de réception n'est nécessaire dans le mode de réalisation particulier de l'invention. En effet, le téléviseur 1051 et le dispositif nomade 1041 sont alimentés par le secteur 103, les échanges d'informations entre le dispositif nomade 1041 et maître 102 étant assurés par les adaptateurs CPL 208 et 308.

L'algorithme de fonctionnement d'un dispositif nomade 1041 comprend une phase d'initialisation et une phase de traitement ci-après détaillées.

La phase d'initialisation comprend notamment les étapes 500 à 504.

Dans une étape 500, le dispositif nomade 1041 est mis sous tension.

Dans une étape 501, une initialisation de l'adaptateur CPL 308 ainsi que de l'interface infrarouge 309 sont réalisées par le programme informatique pilotant le dispositif nomade 1041.

Dans une étape 502, le dispositif nomade 1041 se déclare au près du dispositif maître 102. Ainsi, lors de cette étape 502, une déclaration d'état, une validation des adresses réseau ainsi qu'une validation des sécurités sont réalisées.

En retour, dans une étape 503, le module Master Unit Manager du dispositif maître 102 peut transmettre, sur requête du dispositif nomade, un ensemble de données concernant les services disponibles (par exemple une liste des servies audiovisuels) qui sont ensuite chargés par le dispositif nomade.

Dans une étape 504, le dispositif nomade 1041 est en attente de réception de commandes utilisateur depuis son interface infrarouge 309.

La phase de traitement comprend les étapes 505 à 507 ci-après détaillées.

Dans une étape 505, le dispositif nomade 1041 reçoit par son interface infrarouge 309 une commande en provenance de l'utilisateur.

Dans une étape 506, la commande reçue est décodée et interprétée. Le dispositif nomade 1041 détermine le ou les modules logiciels spécialisés permettant d'exécuter correctement la commande reçue.

Dans une étape 507, lorsque la commande reçue est par exemple une commande de changement de service, le programme du dispositif nomade 1041 initialise un échange avec le dispositif maître 102 et transmet les données correspondant à la commande de l'utilisateur.

Le dispositif maître 102 valide ou non ensuite cette commande (par exemple en envoyant un accusé de réception ou un message d'erreur), et en retour, en cas de validation, met à disposition du dispositif de nomade 1041 le flux vidéo MPEG correspondant au service demandé par l'utilisateur (c'est-à-dire qu'il y a une ouverture des ports respectifs assurant le transfert vidéo en tâche de fond).

Le dispositif nomade 1041 peut transmettre les informations reçues depuis son adaptateur CPL 308 vers la prise péritel en passant par le module de conversion Vidéo/Péritel 312.

Il est à noter que certaines commandes utilisateur ne nécessitent qu'un traitement local au niveau du dispositif nomade 1041 sans échange de données avec le dispositif maître 102 (par exemple un changement du niveau sonore).

En outre, selon les interfaces, les commandes ou les flux d'informations traités, le traitement réalisé par le dispositif nomade 1041 est plus ou moins complexe.

Lorsque l'exécution de la commande reçue a été effectuée, le dispositif nomade 1041 revient dans un état d'attente de réception d'une commande utilisateur (étape 504).

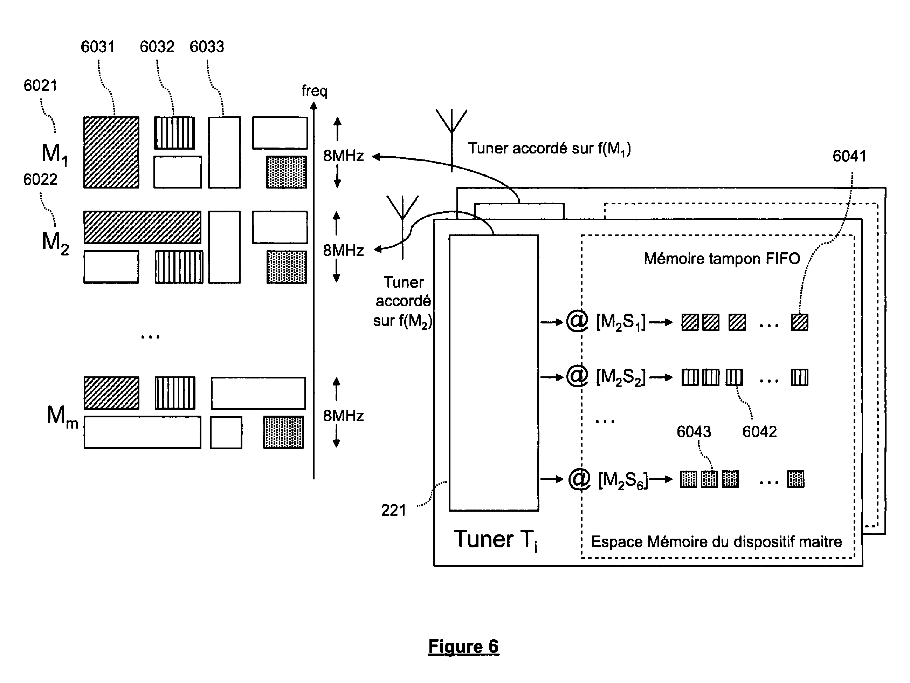

On décrit désormais, en relation avec la ***figure 6****,* le principe de fonctionnement du tuner d'un module de réception selon le mode de réalisation particulier de l'invention.

Dans la suite de la description, on considère, à titre d'exemple illustratif et non limitatif, un tuner 221 TNT d'un module de réception 2091.

Il est à noter que les signaux transmis par des transpondeurs TNT sont des signaux mono-fréquence (6021,6022) hertzien ayant une bande passante associée de 8MHz. Chaque signal TNT mono-fréquence est encore appelé multiplex (référencés par Mi, i ∈[1, m] , où m est le nombre total de multiplex reçus).

Aussi, selon le principe de codage des services transmis par la TNT, il est possible de visualiser simultanément plusieurs services (ou chaînes) différents provenant d'un même multiplex décodé par le seul et même tuner 221.

Grâce à la compression et au brassage des informations numériques, chaque multiplex peut comporter, selon le standard TNT, jusqu'à six services (noté Sₖ, k ∈ [1, 6]) à destination du téléspectateur plus un septième destiné à la gestion du flux d'informations et du multiplex 602.

L'opération de compression et de brassage des informations numériques est appelée « multiplexage », et est effectuée à l'émission par des transpondeurs TNT.

Les services (6031, 6032, 6033) d'un multiplex 6021 étant de nature diverse au cours de la journée (dessin animé, film d'action, ...), leur besoin en bande passante est également variable.

Aussi, un tel multiplexage des données permet, grâce entre autres à l'utilisation d'un système de découpage en paquets (6041, 6042, 6043), de planifier les besoins en bande passante des services d'un même multiplex et d'optimiser ainsi l'utilisation de la bande passante disponible.

Ainsi, au niveau du dispositif maître 102, une opération est nécessaire pour « capter » un service 6031 : la recomposition de celui-ci, en choisissant les paquets d'information 6041 lui correspondant, parmi l'ensemble des données reçues issues d'un multiplex 6021 donné. Il s'agit de l'opération de démultiplexage effectuée par les tuners numériques des modules de réception du dispositif maître 102.

En effet après compression, tous les paquets représentatifs de différents services regroupés au sein d'un même multiplex comportent une signature pour identifier leur appartenance à tel ou tel autre service du multiplex.

Un tuner d'un module de réception (encore noté Ti, i ∈[1, N], N étant le nombre de tuners du dispositif maître 102) peut s'accorder sur la fréquence d'émission du transpondeur émettant d'un multiplex donné.

Ainsi, selon un exemple du mode de réalisation particulier, le tuner Ti 221 s'accorde sur la fréquence f1 associée au multiplex M2 6022 afin d'extraire les différentes services qui y sont codés, brassés et compressés, en autant de séries de paquets 6042 (chaque série de paquets étant associée à un service donné).

En effet, au sein de chaque service, l'information numérique est codée sous forme de paquets (encore notés PIDs) de 188 octets. Ces paquets portent tous la signature du service auquel ils appartiennent et peuvent comporter par exemple des données audio en différents langages, des données texte pour le sous-titrage, des données vidéo pour l'image, ...

Chaque série de paquets d'un multiplex est ensuite sauvegardée dans une mémoire tampon de la mémoire RAM 202 appartenant au dispositif maître 102 qui comprend un ensemble de mémoires FIFO (encore appelées moyens de stockage), notées Rᵢₖ.

Ainsi, selon le mode de réalisation particulier de l'invention, les différents tuners Tᵢ permettent d'assurer la disponibilité permanente de l'ensemble des services (et des programmes associés) qu'ils ont identifiés après avoir parcouru la totalité du spectre des fréquences réservées à la TNT.

Un certain nombre de multiplex Mi sont ainsi répertoriés et pour chacun d'eux, jusqu'à 6 services (selon le standard TNT en vigueur) à destination du téléspectateur pourront être trouvés.

Il est à noter que les tuners classiquement utilisés testent la signature de chaque paquet de données reçu d'un multiplex pour ne conserver et ne transmettre que les paquets correspondant au service demandé par un utilisateur. Les paquets correspondant à un autre service que celui demandé par l'utilisateur sont supprimés.

Selon le mode de réalisation particulier de l'invention, le tuner d'un module de réception utilise la signature des paquets pour recomposer tous les services disponibles sur le multiplex et les mettre à disposition du dispositif maître 102 qui décide de la suite des traitements à associer à chaque service ainsi rendu disponible.

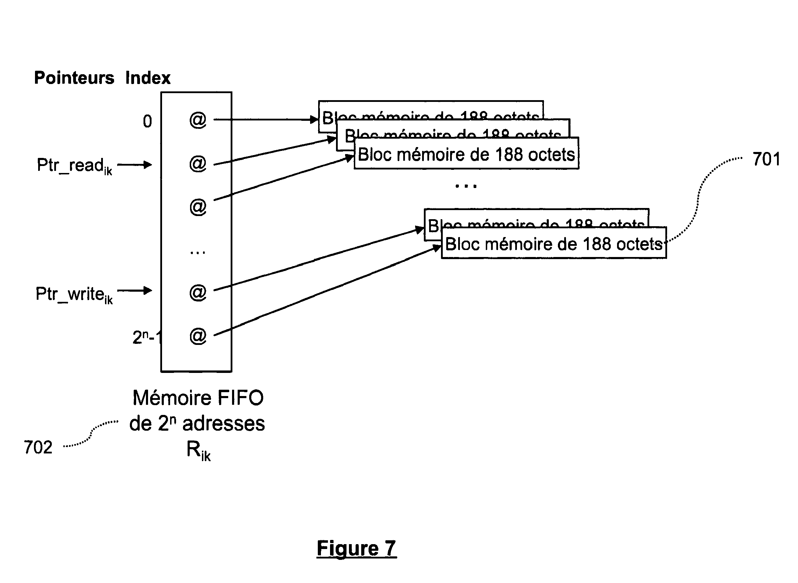

On décrit désormais, en relation avec la ***figure 7****,* un exemple d'architecture d'une mémoire FIFO de la mémoire tampon du dispositif maître 102, selon le mode de réalisation particulier de l'invention.

Tel que cela a été décrit en relation avec la figure 6, les tuners du dispositif maître 102, au lieu de rejeter les paquets des services non demandés par un utilisateur, acheminent les données de l'ensemble des services des différents multiplex reçus vers une mémoire tampon.

La mémoire tampon comprend un ensemble de mémoires FIFO 702 organisées en « ring buffer » (pour « tampon circulaire » en français) de 2ⁿ mots, chaque mot représentant un bloc mémoire 701 de 188 octets correspondant à la taille d'un paquets.

La valeur « n » est fonction de la performance intrinsèque du processeur 201 du dispositif maître 102 et de la complexité (notamment le facteur de compression) du service émis. Elle est par exemple déterminée de manière empirique après prototypage.

En d'autres termes, la valeur de n (2ⁿ blocs mémoire 701 étant alloués par le dispositif maître 102 pour un service) est déterminée en fonction de la performance de lecture (avantageusement supérieure à la performance d'écriture) afin d'assurer un bon fonctionnement de la mémoire tampon. Un pointeur de lecture, encore noté Ptr_readᵢₖ, est alors en permanence juste derrière un pointeur d'écriture, encore noté Ptr_writeᵢₖ.

Si le pointeur d'écriture "dépasse" le pointeur de lecture (il y a alors un dépassement des capacités (ou « overflow » en anglais) de la mémoire FIFO 701), un contenu équivalent à 2" paquets est alors perdu avec les conséquences respectives sur la qualité d'image à la réception.

Ainsi, selon le mode de réalisation particulier de l'invention, il y a autant de mémoires FIFO 702 que de services identifiés lors du balayage du spectre de fréquences TNT.

Les mémoires FIFO 702 sont identifiés par tuner 221 et par service. Si un tuner est déjà accordé sur un multiplex, il ne sera pas nécessaire d'accorder un second tuner 221 sur le même multiplex.

Les mémoires FIFO 702, notées Rᵢₖ, sont donc identifiés par leur tuner Tᵢ et le service qu'ils véhiculent Sₖ.

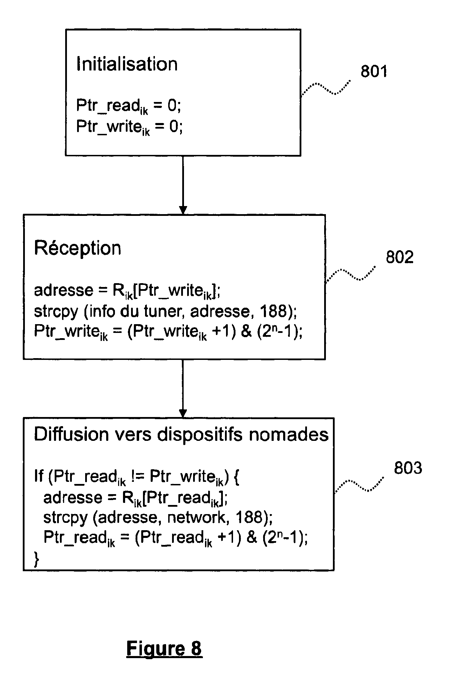

La taille des mémoires FIFO 702 étant une puissance de 2, l'opération de bouclage de chacune des mémoires FIFO 702 organisées en ring buffer (c'est-à-dire le passage d'un pointeur pointant sur la dernière adresse 2ⁿ-1 d'une mémoire à ce même pointeur pointant sur la première adresse de cette mémoire) est par exemple réalisée en une seule opération élémentaire de type « ET » logique avec l'adresse 2ⁿ-1 tel que décrit en relation avec la figure 8 ci-après.

On décrit désormais, en relation avec la ***figure 8***, les étapes principales d'un algorithme de gestion d'une mémoire FIFO 702 de la mémoire tampon du dispositif maître 102, selon le mode de réalisation particulier de l'invention.

Dans une étape 801, les mémoires FIFO Rᵢₖ 702 sont initialisées avec les adresses de chaque bloc mémoire 701 de 188 octets. Ainsi, les deux pointeurs Ptr_readᵢₖ et Ptr_writeᵢₖ de chaque mémoire FIFO 702 sont initialisés à 0 (c'est-à-dire que Ptr_readᵢₖ=0 et Ptr_writeᵢₖ=0).

Le pointeur Ptr_writeᵢₖ n'est manipulé en écriture que par le tuner d'un module de réception. Le pointeur Ptr-readᵢₖ n'est manipulé en lecture que par le processeur 201 du dispositif maître 102. En conséquence, aucune gestion complexe de « mutex » n'est mise en oeuvre pour assurer le bon fonctionnement du mécanisme de « ring-buffer » entre les opérations exécutées par le tuner et celles exécutées par le processeur 201 lors de la répartition des données vers les dispositifs nomades ».

Dans une étape 802, un paquet d'un service est reçu par le tuner 221 du module de réception appartenant au dispositif maître 102.

Lors de la réception de ce paquet, le tuner 221 sauvegarde les données correspondantes du paquet reçu, sans aucun traitement, dans le premier bloc de mémoire 701 tampon disponible et dont l'adresse est donnée par Rᵢₖ[Ptr_writeᵢₖ].

Le pointeur Ptr_writeᵢₖ est incrémenté (en gérant correctement le bouclage de la mémoire FIFO 702) pour pointer vers le prochain bloc mémoire 701 disponible en écriture dans la mémoire FIFO 702 Rᵢₖ et contenant l'adresse d'un bloc mémoire 701 de 188 octets dédié au stockage temporaire d'un paquet.

Un exemple d'implémentation logiciel de l'étape 803 est présenté ci-après :
*adresse = Rᵢₖ[ptr_writeᵢₖ];*
*strcpy (info du tuner, adresse, 188);*
*Ptr_writeᵢₖ = (Ptr_writeᵢₖ + 1) & (2ⁿ-1);*

Ces opérations sont cadencées par la vitesse de réception des paquets par les différents tuners 221 du dispositif maître 102.

Dans une étape 803 (quasiment simultanée à l'étape 802), le processeur 201 assure l'acheminement des différents services reçus vers les dispositifs nomades qui en font la demande.

Du point de vue des mémoires FIFO 702 Rᵢₖ, l'opération réalisée s'apparente à une opération de lecture mise en oeuvre par le pointeur Ptr_readᵢₖ.

Avantageusement, le pointeur Ptr_readᵢₖ ne peut pas dépasser le pointeur d'écriture Ptr_writeᵢₖ et un test est par exemple effectué à cet effet.

Lorsque le pointeur Ptr_readᵢₖ est égal au pointeur Ptr_writeᵢₖ, la requête de lecture des données de la mémoire FIFO 702 est rejetée.

Dans le cas contraire, l'opération de lecture peut prendre en compte le bloc mémoire 701 dont l'adresse est donnée par Rᵢₖ[Ptr_readᵢₖ].

Le pointeur Ptr_readᵢₖ est alors incrémenté (en gérant correctement le bouclage de la mémoire FIFO 702) pour pointer vers le prochain élément disponible en lecture dans le mémoire FIFO 702 Rᵢₖ.

Un exemple d'implémentation logiciel de l'étape 803 est présenté ci-après :
*If (Ptr_read_{¡k}!=Ptr_writeᵢₖ) {*
*adresse = Rᵢₖ[Ptr_read_{¡k}];*
*strcpy (adresse, network, 188);*
*Ptr_readᵢₖ = (Ptr_readᵢₖ* + *1) & (2ⁿ-1);*
*}*

Ces opérations sont cadencées par les requêtes de lecture des services provenant des dispositifs nomades.

A l'opposé du fonctionnement d'une mémoire FIFO organisée en ring buffer comme on peut en rencontrer dans le cas de la gestion d'une liaison asynchrone entre deux ordinateurs, la gestion des mémoires FIFO 702 selon le mode de réalisation particulier permet d'accepter l'écrasement des données non encore lues.

Comme, il n'est pas possible d'ordonner au flux Hertzien de s'arrêter le temps que les données de la mémoire FIFO 702 soient prises en compte, il est important que le dispositif maître 102 ait une puissance de traitement suffisante pour lire ou traiter les informations reçues plus vite que la vitesse de réception elle-même.

Un des rôles des mémoires FIFO 702 est donc de permettre des variations dans la vitesse de traitement et d'absorber ces dernières sans conséquence sur la qualité de l'image transmise vers les dispositifs nomades.

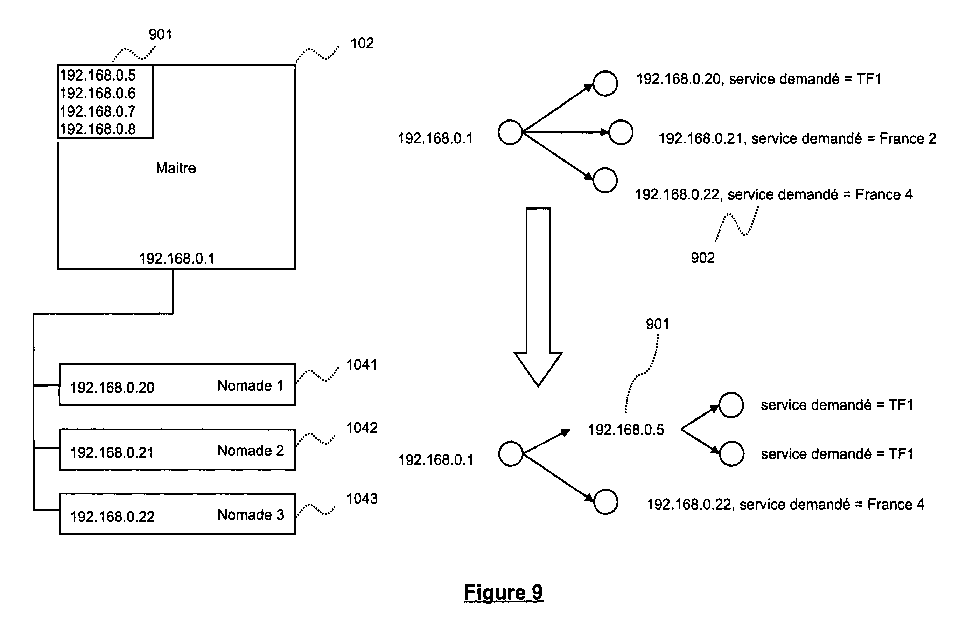

On présente, en relation avec la ***figure 9***, un exemple de gestion, par le dispositif maître 102, des demandes de diffusion de services par des dispositifs nomades du réseau de communication 1000, selon le mode de réalisation particulier de l'invention.

Tel qu'illustré par la figure 9, on considère ci-après le réseau de communication 1000 auquel sont connectés trois dispositifs nomades 1041, 1042, 1043.

La gestion, par le dispositif maître 102, des demandes de diffusion de services par les dispositifs nomades du réseau de communication 1000 permet d'optimiser le flux de données transitant sur le réseau 1000.

Comme mentionné auparavant, le protocole Internet sur courants porteurs en ligne (ou CPL) est mis en oeuvre au sein du réseau 1000 pour transmettre des données numériques décodées par les tuners depuis le dispositif maître 102 vers les différents dispositifs nomades du réseau 1000.

L'architecture du protocole Internet est organisée en 5 couches distinctes, chacune adressant des problématiques spécifiques. Parmi les différentes couches, la couche 3 est celle qui assure la gestion dite « réseau » (notamment la spécification et la gestion des modes d'adressage).

Le protocole Internet prévoit dans sa couche 3 un mode « IGMP » (pour en anglais « Internet Group Management Protocol ») qui gère la notion d'appartenance à un groupe de multi-diffusion, encore appelé groupe « multicast ».

Il est de la responsabilité des membres du groupe de rejoindre un groupe multicast ou de s'en séparer.

Selon le mode de réalisation particulier de l'invention, une telle opération (intégration d'un dispositif nomade à un groupe multicast, départ d'un dispositif nomade d'un groupe multicast) est réalisée par le dispositif maître 102 qui peut gérer la diffusion synchrone d'un seul et même un service vers plusieurs dispositifs nomades.

Le dispositif maître 102 dispose d'adresses multicast 901 (par exemple 192.168.0.5, 192.168.0.6, 192.168.0.7 et 192.168.0.8) de groupes multicast permettant un envoi unique vers plusieurs dispositifs nomades (appartenant à un même groupe multicast) d'un même service issu d'un des tuners du dispositif maître 102. Une telle opération (envoi d'un même service vers plusieurs dispositifs nomades) est encore appelée multi-diffusion (ou multicasting en anglais).

Selon une des implémentations possibles du multicasting conforme au protocole IP (pour « Internet Protocol » en anglais), le dispositif maître 102 déclare et garde à sa disposition un certain nombre d'adresses multicast. Il peut alors gérer dynamiquement l'intégration ou le départ des dispositifs nomades d'un groupe multicast associé à un service en multicast, en fonction des demandes de changement de services des dispositifs nomades.

Le nombre maximum d'adresses multicast 901 pouvant être nécessaires peut être déterminé à l'avance, en fonction du nombre de dispositif nomades connectés au réseau de communication 1000. En effet, un maximum de Int(K/2) adresses multicast 901 (« Int » étant la fonction partie entière) est par exemple nécessaire dans le cas où K dispositifs nomades sont connectés au réseau 1000.

Par exemple, dans le cadre d'une utilisation domestique, le nombre maximum d'adresses multicast 901 est généralement très faible (par exemple inférieur à 10). Il est ainsi envisageable de réserver quelques adresses Internet multicast sans perturber le fonctionnement ni la souplesse du réseau informatique d'une habitation.

Lorsque des dispositifs nomades requièrent l'accès à des services distincts, le dispositif maître 102 (par exemple d'adresse 192.168.0.1) leur associe à chacun une adresse de type unicast 902.

Ainsi, tel qu'illustré sur la figure 9, chacun des trois dispositifs nomades 1041, 1042, 1043 (repérés par leur adresse respective unicast, par exemple 192.168.0.20, 192.168.0.21, 192.168.0.22) reçoit un service différent (par exemple la chaîne TF1 pour le dispositif nomade 1041 d'adresse 192.168.0.20, la chaîne France 2 pour le dispositif nomade 1042 d'adresse 192.168.0.21, et la chaîne France 4 pour le dispositif nomade 1043 d'adresse 192.168.0.22).

Si, lors d'une demande de changement de service, un des dispositifs nomades 1042 (appelé premier dispositif nomade par exemple d'adresse 192.168.0,21) demande le même service que celui en cours de réception par un autre dispositif nomade 1041 (appelé second dispositif nomade par exemple d'adresse 192.168.0.20) du réseau 1000, un module de gestion des demandes et transmissions de données entre le dispositif maître 102 et les dispositifs nomades 1041, 1042 associe alors l'adresse des premier et second dispositifs nomades demandant le même service (par exemple la chaîne de télévision TF1) à un groupe multicast possédant une adresse multicast 901 (par exemple l'adresse 192.168.0.5).

Il est à noter que le module de gestion précité est par exemple un sous-ensemble du programme informatique pilotant le dispositif maître 102.

Le Master Unit Manager assure par exemple l'optimisation des données transférées en réalisant une multi-diffusion (ou multicast) d'un seul et unique flux MPEG provenant d'un démodulateur 224 (après passage par un unique tuner) vers plusieurs ports du dispositifs maître 102, ce qui est rendu possible par les protocoles de communication Ethernet utilisés.

Le service en cours de transmission n'est pas interrompu et aucune donnée n'est perdue pour le second dispositif nomade 1041 en cours de réception du service avant la demande du premier dispositif nomade 1042. En effet, la réception d'un service n'est pas liée à l'attribution des adresses Internet, mais au fonctionnement des mémoires FIFO 702 précédemment décrites.

La mémoire FIFO 702 dédiée à chaque service en cours de transmission permet d'absorber d'éventuelles perturbations générées par le changement d'adresse.

Le premier dispositif nomade 1042 (qui a effectué une demande de changement de service sur requête) se voit quant à lui également attribué l'adresse associée au groupe multicast pour lui permettre de recevoir le service ainsi multi-diffusé de manière synchrone au second dispositif nomade 1041.

Ainsi, selon le mode de réalisation particulier de l'invention, un service donné peut être transmis en multicast vers deux ou plus dispositifs nomades dans son intégralité.

Il a été expliqué auparavant qu'un tuner chargé de la réception du service donné ne fait aucun traitement quant à son contenu, ce qui signifie que si le service comporte des attributs spécifiques (tels que le choix d'une langue parmi plusieurs, la transmission simultanée de sous-titrage ou d'informations textuelles au service), ces attributs spécifiques restent disponibles de façon totalement indépendante pour chaque dispositif nomade appartenant au groupe multicast.

Le même service multi diffusé peut alors être reçu par exemple en version originale dans une partie de l'habitation et en version française dans une autre, alors qu'il n'aura été reçu que par un seul et même tuner du dispositif maître 102 et transporté une et une seule fois sur le réseau 1000.

Ainsi, lorsque le dispositif maître 102 comprend un nombre de modules de réception TNT suffisant pour capter l'ensemble des multiplex émis par les différents transpondeurs TNT, l'invention permet de proposer, à chacun des dispositifs nomades du réseau 1000, la totalité des services disponibles sur la TNT.

L'invention permet également d'optimiser les débits de flux sur le réseau de communication CPL.

Elle permet en outre, au niveau de chacun des dispositifs nomades recevant un même service, de choisir les paramètres associés au service de manière indépendante.

D'autre part, l'invention permet d'acheminer un même service vers plusieurs dispositifs nomades en assurant que le seul flux numérique envoyé n'est ni dupliqué, ni répété sur le support physique de transmission (c'est-à-dire que si plusieurs dispositifs nomades ont demandé le même service alors un même flux numérique leur est envoyé).

## Revendications

1. Dispositif source (102) comprenant des moyens de réception (220) d'un flux numérique multiplexé en fréquence comprenant des moyens de gestion (221, 222, 223, 224, 200) du flux numérique reçu, lesdits moyens de gestion comprenant au moins un syntoniseur (221) recevant le flux numérique reçu et délivrant un flux syntonisé véhiculant une pluralité de services audiovisuels (6031, 6032),
**caractérisé en ce que** lesdits moyens de gestion comprennent en outre des moyens de distribution (200) permettant, pour chaque flux syntonisé, de distribuer simultanément au moins deux ensembles de paquets (6041, 6042) représentatifs chacun d'un service audiovisuel (6031, 6032) véhiculé par ledit flux syntonisé, chaque ensemble de paquets étant destiné à être reçu par au moins un dispositif récepteur,
et **en ce que** le dispositif source (102) comprend :
- des moyens de réception d'au moins une requête en provenance d'un premier dispositif récepteur requérant auprès dudit dispositif source la transmission, d'un ensemble de paquets représentatif d'un service audiovisuel, dit service audiovisuel demandé ;
- des moyens de détermination si ledit service audiovisuel demandé est identique à un service audiovisuel reçu par au moins un second dispositif récepteur ;
- des moyens de multi-diffusion de l'ensemble de paquets représentatifs dudit service audiovisuel reçu par le second dispositif récepteur afin de le transmettre au premier dispositif récepteur, lesdits moyens de multi-diffusion étant activés dans le cas d'une détermination positive.

2. Dispositif source (102) selon la revendication 1, **caractérisé en ce que** lesdits moyens de distribution comprennent des moyens de transmission de chaque ensemble de paquets, via un réseau de communication (1000), à au moins un dispositif récepteur connecté audit réseau.

3. Dispositif source (102) selon la revendication 1, **caractérisé en ce que** lesdits moyens de distribution comprennent des moyens de délivrance de chaque ensemble de paquets sur une sortie distincte dudit dispositif source (102) destinée **à** la connexion d'un dispositif récepteur.

4. Dispositif source (102) selon l'une quelconque des revendications 1 à 3, **caractérisé en ce que** lesdits moyens de distribution comprennent également des moyens de stockage (702) d'au moins certains des ensembles de paquets représentatifs des services véhiculés par le flux syntonisé, dits ensembles mémorisés,
et **en ce que** lesdits au moins deux ensemble de paquets (6041, 6042) font partie des ensemble mémorisés.

5. Dispositif source (102) selon la revendication 4, **caractérisé en ce que** lesdits moyens de stockage (702) comprennent, pour chaque ensemble de paquets, une mémoire tampon circulaire comprenant une pluralité de blocs mémoire (701).

6. Dispositif source (102) selon l'une quelconque des revendications 4 ou 5, **caractérisé en ce qu'**il comprend des moyens d'obtention d'une liste de services audiovisuels comprenant les services associés auxdits ensembles mémorisés et des moyens de transmission de cette liste à chacun des dispositifs récepteurs.

7. Dispositif source (102) selon l'une quelconque des revendications 1 à 6, **caractérisé en ce que** ledit syntoniseur (221) est un syntoniseur TNT.

8. Dispositif source (102) selon la revendication 2 ou l'une quelconque des revendications 4 à 7 lorsqu'elles dépendent de la revendication 2, **caractérisé en ce que** le dispositif source (102) est connecté à chacun des dispositifs récepteurs dudit réseau (1000) au moyen de la technologie des courants porteurs en ligne.

9. Dispositif source (102) selon l'une quelconque des revendications 1 à 8, **caractérisé en ce que** lesdits moyens de gestion comprennent un nombre déterminé de syntoniseurs (221), ledit nombre déterminé étant calculé en fonction du nombre de services audiovisuels véhiculés par le flux numérique multiplexé en fréquence et en fonction du nombre de dispositifs récepteurs destinés à recevoir un ensemble de paquets de données.

10. Procédé de gestion d'un flux numérique multiplexé en fréquence préalablement reçu par un dispositif source (102), ledit procédé de gestion étant mis en oeuvre par ledit dispositif source (102),
ledit procédé de gestion comprenant une étape de syntonisation du flux numérique reçu permettant de délivrer au moins un flux syntonisé véhiculant une pluralité de services audiovisuels (6031, 6032),
**caractérisé en ce qu'**il comprend :
- pour chaque flux syntonisé, une étape de distribution simultanée d'au moins deux ensembles de paquets de données représentatifs chacun d'un service audiovisuel (6031, 6032) véhiculé par ledit flux syntonisé, chaque ensemble de paquets étant destiné à être reçu par au moins un dispositif récepteur,
- une étape de réception d'au moins une requête en provenance d'un premier dispositif récepteur requérant auprès dudit dispositif source la transmission, d'un ensemble de paquets représentatif d'un service audiovisuel, dit service audiovisuel demandé ;
- une étape de détermination si ledit service audiovisuel demandé est identique à un service audiovisuel reçu par au moins un second dispositif récepteur ;
- une étape de multi-diffusion de l'ensemble de paquets représentatifs dudit service audiovisuel reçu par le second dispositif récepteur afin de le transmettre au premier dispositif récepteur.

11. Produit programme d'ordinateur, téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de gestion selon la revendication 10.
